# EUROPEAN PATENT APPLICATION

(11) **EP 4 293 862 A1**
(43) Date of publication of application: **20.12.2023**
(21) Application number: 22206667.2
(22) Date of filing: 10.11.2022
(51) Int. Cl.: H02J 7/00, H02J 50/80

(54) **WIRELESS CHARGING APPARATUS, METHOD FOR CONTROLLING WIRELESS CHARGING APPARATUS, AND RECORDING MEDIUM STORING INSTRUCTIONS TO PERFORM METHOD FOR CONTROLLING WIRELESS CHARGING APPARATUS**

(30) Priority: 14.06.2022 KR 20220072428
(71) Applicant: SKC Co., Ltd., Suwon-si, Gyeonggi-do 16336 (KR)
(72) Inventor: KIM, Nah Young, 16338 Suwon-si, Gyeonggi-do (KR); JO, Yeon Jeong, 16338 Suwon-si, Gyeonggi-do (KR); LEE, Seung Hwan, 16338 Suwon-si, Gyeonggi-do (KR); KIM, Tae Kyoung, 16338 Suwon-si, Gyeonggi-do (KR)
(74) Representative: BCKIP Part mbB

(57) **Abstract**

There is provided a wireless charging apparatus comprising a power transmitter for wirelessly transmitting power to a battery, a temperature sensor for detecting at least one of a temperature of the power transmitter, a temperature of the battery, and a temperature of a power receiver, and a controller for changing a current profile of the power transmitter based on the temperature. The controller controls the power transmission in constant current (301, 311) and constant voltage (303, 313) modes based on a preset first current profile (PIC1, PID1) when the temperature is less than a preset reference temperature (e.g. 70°C), and on a preset second current profile (PIC2, PID2) when the temperature is equal to or greater than the preset reference temperature, where the current (I_{low}) of the second constant current profile (PIC2) is lower than the current (Iₘₐₓ) of the first constant current profile (PIC1).

## Description

### TECHNICAL FIELD

The present disclosure relates to a wireless charging apparatus and a method for controlling the same.

### BACKGROUND

Recently, the development and dissemination of mobilities, portable electronic devices, and electric vehicles are expanding, and accordingly rechargeable secondary batteries having high energy density which can be used as power sources for these mobilities, portable electronic devices and electric vehicles have been actively developed.

In the case of a low-capacity battery of the secondary batteries in which one battery cell is packaged in a form of one pack, it is used in electronic devices such as mobilities or portable electronic devices. In the case of a large-capacity battery among the secondary batteries in a battery pack unit with dozens of battery cells connected, it is widely used as a power source for driving motors in electric vehicles, etc.

Secondary batteries include Ni/Cd batteries, Ni/MH batteries, and lithium ion batteries. Among them, lithium ion batteries have an advantage in that their energy density is much higher than that of Ni/Cd batteries or Ni/MH batteries. In addition, since lithium ion batteries can be manufactured in a small size and in a light weight, they are not only useful as power sources for mobilities and portable electronic devices, but also considered as a next-generation energy storage medium, such as expanding their range of use as power sources for electric vehicles.

Despite the above advantages, lithium ion batteries have disadvantages in that they are vulnerable to heat generation and overcharging. If the secondary battery is left without any protection against heat generation and overcharging, the secondary battery as well as the charging device for charging the secondary battery may ignite or explode, resulting in personal injury or property damage.

Accordingly, there is a need for a technology capable of preventing heat generation or overcharging of a battery to solve problems caused by heat generation or overcharging.

### SUMMARY

An embodiment of the present disclosure was invented with the above background in mind, and it is provided with a wireless charging apparatus capable of preventing damage to a substrate circuit and explosion of a battery due to heat generated during charging of a battery and overcharging in advance, and a method for controlling the same.

In accordance with an aspect of the present disclosure, there is provided a wireless charging apparatus, the wireless charging apparatus may comprise: a power transmitter configured to wirelessly transmit power to a battery; a temperature sensor configured to detect at least one of a temperature of the power transmitter, a temperature of the battery, and a temperature of a power receiver; and a controller configured to change a current profile of the power transmitter based on the temperature. Wherein when the temperature is less than a preset reference temperature, the controller controls power transmission of the power transmitter based on a preset first current profile. Wherein when the temperature is equal to or greater than the preset reference temperature, the controller controls power transmission of the power transmitter based on a second current profile in which a lower current flows than that in the first current profile.

The first current profile may comprise a first constant profile in which a current constantly flows even if the charging time of the battery passes, and a first reduction profile in which the current is gradually lowered from the first constant profile according to the charging time.

The second current profile may comprise a second constant profile that constantly flows with the current lower than the first constant profile as the charging time passes, and a second reduction profile in which the current is gradually lowered from the second constant profile according to the charging time.

A current flowing in the power transmitter in the second constant profile may be lower than a current flowing in the power transmitter in the first constant profile.

The power transmitter may provide a constant current mode for flowing a current at a constant speed to a closed circuit regardless of time or a constant voltage mode for applying a constant voltage to the closed circuit regardless of time.

The controller may control the power transmission of the power transmitter based on the second current profile having the current lower than the first current profile when the temperature is greater than or equal to the preset reference temperature in the constant current constant mode, and when changing from the constant current mode to the constant voltage mode, the controller may control the power transmission of the power transmitter so that the second current profile is changed to an original profile of the first current profile.

In accordance with another aspect of the present disclosure, there is provided a control method of a wireless charging apparatus, the method may may comprise: transmitting power wirelessly to the battery; sensing a temperature; and changing a current profile of a power transmitter for transmitting the power based on the temperature. Wherein the changing of the current profile based on the temperature comprises controlling power transmission of the power transmitter based on a preset first current profile when the temperature is less than a preset reference temperature, and controlling the power transmission of the power transmitter based on a second current profile in which a lower current flows than that in the first current profile when the temperature is equal to or greater than the preset reference temperature.

The transmitting of the power wirelessly to the battery may comprise providing a constant current mode that allows a current having a constant speed to flow in a closed circuit regardless of time or a constant voltage mode that applies a constant voltage to the closed circuit regardless of time.

The changing of the current profile based on the temperature may comprise: in the constant current mode, when the temperature is equal to or greater than the preset reference temperature, controlling the power transmission of the power transmitter based on the second current profile having the current lower than the first current profile; and when changing from the constant current mode to the constant voltage mode, controlling the power transmission of the power transmitter so that the second current profile is changed to an original profile of the first current profile.

The first current profile may comprise a first constant profile in which a current constantly flows even if the charging time of the battery passes, and a first reduction profile in which the current is gradually lowered from the first constant profile according to the charging time.

The second current profile may comprise a second constant profile that constantly flows with a current lower than the first constant profile as the charging time passes, and a second reduction profile in which the current is gradually lowered from the second constant profile according to the charging time.

A current flowing in the power transmitter in the second constant profile may be lower than a current flowing in the power transmitter in the first constant profile.

In accordance with another aspect of the present disclosure, there is provided a non-transitory computer-readable recording medium storing a computer program, which comprises instructions for a processor to perform a control method of a wireless charging apparatus, the control method may comprise: transmitting power wirelessly to the battery; sensing a temperature; and changing a current profile of a power transmitter for transmitting the power based on the temperature. Wherein the changing of the current profile based on the temperature comprises controlling power transmission of the power transmitter based on a preset first current profile when the temperature is less than a preset reference temperature, and controlling the power transmission of the power transmitter based on a second current profile in which a lower current flows than that in the first current profile when the temperature is equal to or greater than the preset reference temperature.

According to an embodiment of the present disclosure, after measuring the temperature at which power is transmitted to the battery, if the temperature is equal to or greater than a preset reference temperature, by controlling power transmission based on a second current profile having a current lower than a preset first current profile, it is possible to prevent damage and explosion of the battery due to heat generated during charging of the battery and overcharging.

### BRIEF DESCRIPTION OF THE DRAWINGS

Fig. 1 is a block diagram illustrating a wireless charging apparatus according to the present disclosure.
Fig. 2 is a graph illustrating a constant current mode and a constant voltage mode in the wireless charging apparatus according to the embodiment of the present disclosure.
Fig. 3A is a graph illustrating changes in current in a constant current section and a current reduction section in the wireless charging apparatus according to the embodiment of the present disclosure.
Fig. 3B is a graph illustrating a voltage change in a voltage increasing section and a voltage constant section in the wireless charging apparatus according to the embodiment of the present disclosure.
Fig. 4 is a flowchart illustrating a charging management method according to the present disclosure.
Fig. 5 is a graph illustrating a constant current mode and a constant voltage mode in a wireless charging apparatus according to another embodiment of the present disclosure.

### DETAILED DESCRIPTION

The advantages and features of the embodiments and the methods of accomplishing the embodiments will be clearly understood from the following description taken in conjunction with the accompanying drawings. However, embodiments are not limited to those embodiments described, as embodiments may be implemented in various forms. It should be noted that the present embodiments are provided to make a full disclosure and also to allow those skilled in the art to know the full range of the embodiments. Therefore, the embodiments are to be defined only by the scope of the appended claims.

Terms used in the present specification will be briefly described, and the present disclosure will be described in detail.

In terms used in the present disclosure, general terms currently as widely used as possible while considering functions in the present disclosure are used. However, the terms may vary according to the intention or precedent of a technician working in the field, the emergence of new technologies, and the like. In addition, in certain cases, there are terms arbitrarily selected by the applicant, and in this case, the meaning of the terms will be described in detail in the description of the corresponding invention. Therefore, the terms used in the present disclosure should be defined based on the meaning of the terms and the overall contents of the present disclosure, not just the name of the terms.

When it is described that a part in the overall specification "includes" a certain component, this means that other components may be further included instead of excluding other components unless specifically stated to the contrary.

In addition, a term such as a "unit" or a "portion" used in the specification means a software component or a hardware component such as FPGA or ASIC, and the "unit" or the "portion" performs a certain role. However, the "unit" or the "portion" is not limited to software or hardware. The "portion" or the "unit" may be configured to be in an addressable storage medium, or may be configured to reproduce one or more processors. Thus, as an example, the "unit" or the "portion" includes components (such as software components, object-oriented software components, class components, and task components), processes, functions, properties, procedures, subroutines, segments of program code, drivers, firmware, microcode, circuits, data, database, data structures, tables, arrays, and variables. The functions provided in the components and "unit" may be combined into a smaller number of components and "units" or may be further divided into additional components and "units".

Hereinafter, the embodiment of the present disclosure will be described in detail with reference to the accompanying drawings so that those of ordinary skill in the art may easily implement the present disclosure. In the drawings, portions not related to the description are omitted in order to clearly describe the present disclosure.

Hereinafter, a detailed configuration of a wireless charging apparatus according to an embodiment of the present disclosure will be described with reference to the drawings.

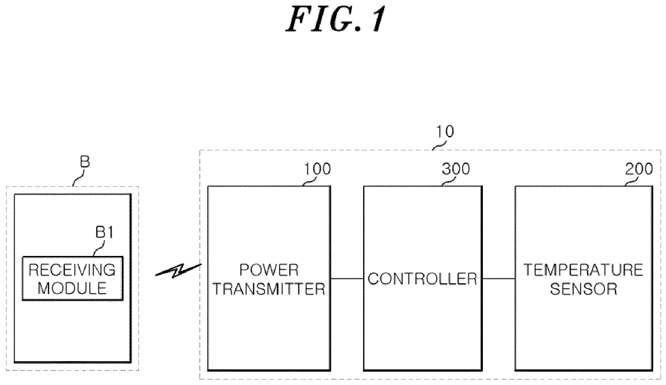

Fig. 1 is a block diagram illustrating the wireless charging apparatus according to the present disclosure.

Referring to Fig. 1, a wireless charging apparatus 10 according to the embodiment of the present disclosure may wirelessly charge a battery B of an electronic device. Here, the electronic device may be a portable small electronic device such as a portable phone, a laptop, a computer, or a camcorder, but is not limited thereto, and the electronic device includes various types of mobilities having a battery B (e.g., an electric kickboard, an electric bicycle, an electric skateboard or an electric scooter).

The wireless charging apparatus 10 may be disposed in a wireless charging station. The wireless charging station may supply wireless power for charging the battery B to the wireless charging apparatus 10. The wireless charging apparatus 10 may prevent overheating of the battery by changing the current profile applied to the charging battery when the charging temperature of the battery is equal to or higher than a preset reference temperature.

The wireless charging apparatus 10 may include a power transmitter 100, a temperature sensor 200, and a controller 300.

The power transmitter 100 may wirelessly transmit power to a power receiver provided in an electronic device. The power transmitter 100 may include a wireless charging coil having a coil shape capable of forming a magnetic field, and a circuit board connected to the wireless charging coil (primary coil). When the power transmitter 100 and the power receiver of the electronic device are disposed to face each other, an electromagnetic induction by an electromagnetic field is generated in the power transmitter 100, and the power receiver (secondary coil) of the mobility may charge the battery of the mobility using the induced current generated by the electromagnetic induction.

The temperature sensor 200 may be a thermal sensor capable of detecting one or more of the temperature of the power transmitter 100, the temperature of the battery, and the temperature of the power receiver. For example, the temperature sensor 200 may sense the temperature of the power transmitter 100. A plurality of such temperature sensors 200 may be provided to sense the temperature. The plurality of temperature sensors may be disposed at various points where heat generation is expected to occur the most.

When the temperature is less than a preset reference temperature (e.g., 70°C), the controller 300 may control the power transmission of the power transmitter 100 based on a preset current profile.

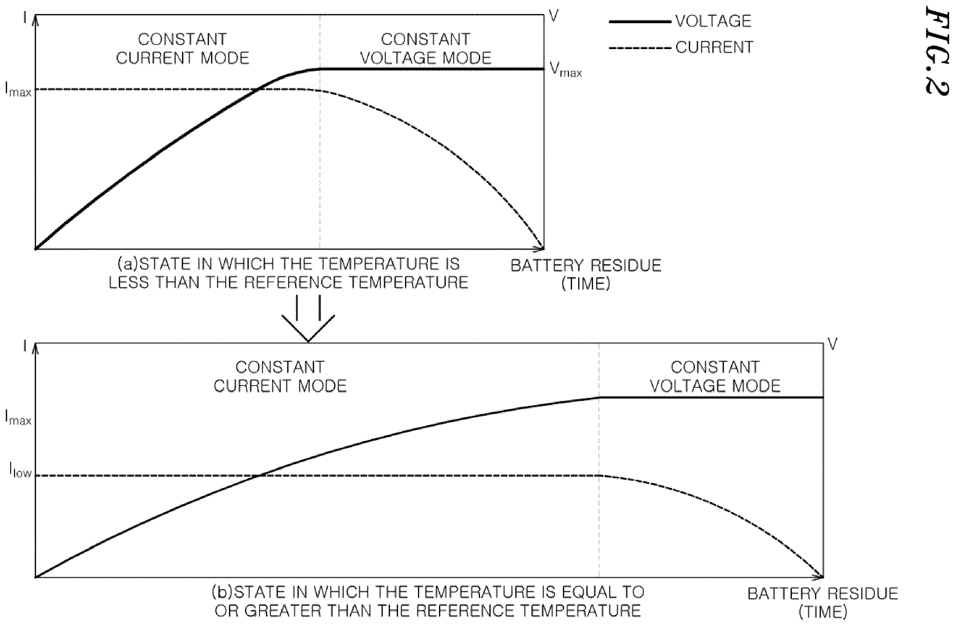

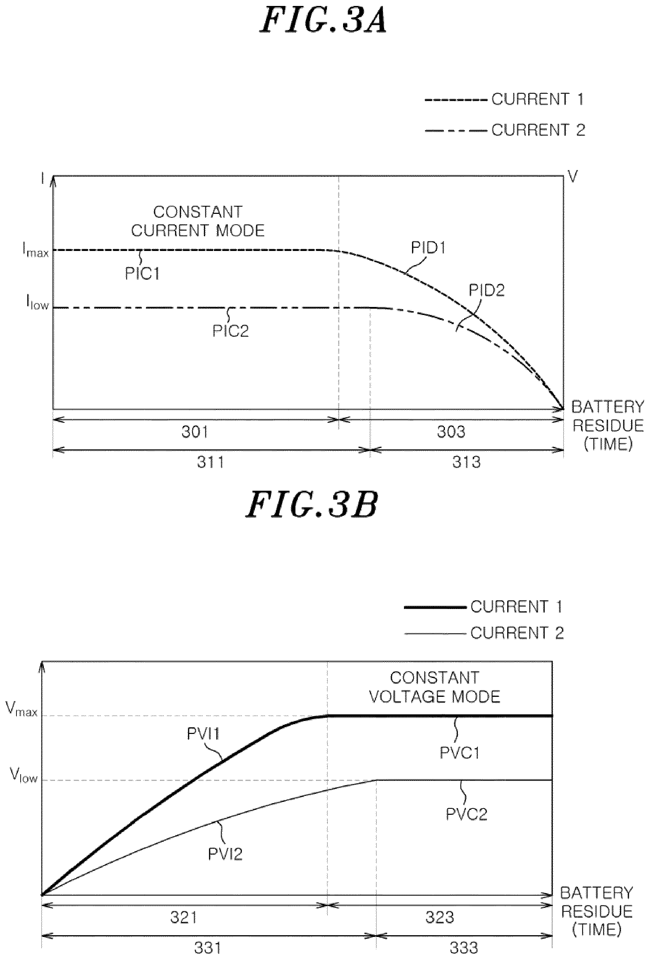

Hereinafter, a power transmission control operation of the power transmitter 100 based on the temperature of the controller 300 will be described in detail with reference to Figs. 2, 3A, and 3B.

The wireless charging apparatus 10 may support both the constant current mode and the constant voltage mode, and the controller 300 may control the output of the power transmitter 100 in a charging mode among the constant current mode and the constant voltage mode.

Fig. 2 is a graph illustrating a constant current mode and a constant voltage mode in the wireless charging apparatus according to the embodiment of the present disclosure.

Referring to Fig. 2, in the state (a) the temperature is less than a preset reference temperature (e.g., 70°C), if the wireless charging apparatus 10 performs charging of the battery B in the constant current mode, a constant current (e.g., Iₘₐₓ) may be supplied and charged until the battery B is charged by a predetermined capacity, and after being charged by the predetermined capacity, the charging current may be gradually reduced. On the other hand, when the wireless charging device 10 performs charging of the battery B in the voltage constant mode, the charging voltage may be gradually increased until the battery B is charged by a predetermined capacity, and after being charged by the predetermined capacity, the charging voltage may be maintained constant.

In the state (b) that the temperature is higher than the preset reference temperature (e.g., 70°C), the controller 300 may perform the charging of the battery B with a current (e.g., I_{low}) or a voltage (e.g., V_{low}) set to be less than in the state (a) below the preset reference temperature (e.g., 70°C) by operating a charging mode among the constant current mode and the constant voltage mode.

Fig. 3A is a graph illustrating changes in current in a constant current section and a current reduction section in the wireless charging apparatus according to the embodiment of the present disclosure, and Fig. 3B is a graph illustrating a voltage change in a voltage increasing section and a voltage constant section in the wireless charging apparatus according to the embodiment of the present disclosure.

First, referring to Fig. 3A, the controller 300 may control the power transmission of the power transmitter 100 based on a preset first current profile PI1 when the temperature is less than the preset reference temperature (e.g., 70°C). Here, the first current profile PI1 may include a first constant current profile PIC1 and a first current reduction profile PID1.

The first constant current profile PIC1 may be understood as a profile of a section 301 in which the current Iₘₐₓ constantly flows even when the charging time of the battery B (or the charging amount of the battery B) increases (hereinafter referred to as a 'first constant current section'). The first current reduction profile PID1 may be understood as a profile of a section 303 in which the current is gradually lowered from the first constant current profile PIC1 as the charging time (or the charging amount of the battery B) increases (hereinafter, 'first current reduction section').

When the temperature is equal to or greater than a preset reference temperature, the controller 300 may control the power transmission of the power transmitter 100 based on the second current profile PI2 having a current I_{low} lower than the current Iₘₐₓ of the first current profile PI1. The second current profile PI2 may include a second constant current profile PIC2 and a second current reduction profile PID2.

The second constant current profile PIC2 may be a profile of a section 311 in which a current I_{low} that is lower than the current Iₘₐₓ of the first constant current profile PIC1 constantly flows as the charging time increases (hereinafter, referred to as a 'second constant current section'). The second current reduction profile PID2 may be a profile of a section 313 in which the current is gradually lowered from the second constant current profile PIC2 as the charging time (charging amount) increases (hereinafter, referred to as a 'second current reduction section'). Under the condition that the charging amount of the battery is the same, the current flowing in the power transmitter 100 in the second current reduction profile PID2 may be lower than the current flowing in the power transmitter 100 in the first current reduction profile PID1.

Since the current flowing in the power transmitter 100 in the second constant current profile PIC2 is lower than the current flowing in the power transmitter 100 in the first constant current profile PIC1, when the temperature is above the preset reference temperature, electric energy applied to the battery (B) is reduced, so that heat generation of the battery (B) and the power transmitter can be reduced.

Referring to Fig. 3B, when the temperature is less than the preset reference temperature (e.g., 70 °C), the controller 300 may control the power transmission of the power transmitter 100 based on the preset first voltage profile PV1. Here, the first voltage profile PV1 may include a first voltage increase profile PVI1 and a first constant voltage profile PVC1.

The first voltage increase profile PVI1 may be understood as a profile of a section 321 in which the voltage gradually increases as the charging time of the battery B (or the charging amount of the battery B) increases (hereinafter, referred to as the 'first voltage increase section'). The first constant voltage profile PVC1 may be understood as a profile of a section 323 in which the voltage is maintained at a constant level Vₘₐₓ even when the charging time (or the charging amount of the battery B) increases (hereinafter, referred to as the 'first constant voltage section').

On the other hand, when the temperature is equal to or higher than the preset reference temperature, the controller 300 may control the power transmission of the power transmitter 100 based on the second voltage profile PV2 having a voltage lower than the voltage of the first voltage profile PV1. Here, the second voltage profile PV2 may include a second constant voltage profile PVC2 and a second voltage increase profile PVI2.

The second constant voltage profile PVC2 may be a profile of a section 333 in which a voltage V_{low} of a level lower than that of the first constant voltage profile PVC1 is constantly applied even if the charging time (or charging amount) is increased (hereinafter, referred to as a 'second constant voltage section'). Accordingly, the controller 300 may control the voltage applied to the power transmitter 100 in the second constant voltage profile PVC2 to be lower than the voltage applied to the power transmitter 100 in the first constant voltage profile PVC1.

Similarly, the second voltage increase profile PVI2 may be a profile of a section 331 in which the voltage gradually rises as the charging time (or amount of charge) increases (hereinafter, referred to as a 'second voltage increase section'). In this case, the second voltage increase profile PVI2 may be set to a voltage V_{low} of a level lower than that of the first voltage rise profile PVI1. Accordingly, in the second voltage increase section 331 in which the temperature is above the preset reference temperature, the controller 300 may control the voltage applied to the power transmitter 100 according to the second voltage increase profile PVI2.

As described above, when the temperature of the power transmitter 100 is equal to or higher than the preset reference temperature, the electric energy applied to the battery B is reduced by the second voltage profile PV2, and thus, it is possible to reduce heat generation of the battery B and the power transmitter 100.

The controller 300 may control the power supply so that the transmission module 130 wirelessly charges the mobility based on the constant current profile or the constant voltage profile according to the charging amount (charging time) of the battery.

Charging based on the constant current profile may be referred to as a constant current mode, and charging based on the constant voltage profile may be referred to as a constant voltage mode.

The constant current mode may be understood as a mode in which electric energy of a constant current is applied to the transmission module 130 regardless of time. In the constant current mode, the current is constant, but as the charging amount of the battery increases, the voltage applied to the wireless charging coil may increase.

The constant voltage mode may be understood as a mode in which electric energy of a constant voltage is applied to the transmission module 130 regardless of time. In the constant voltage mode, the voltage is constant, but as the charging amount of the battery increases, the current flowing through the wireless charging coil may decrease.

The controller 300 may communicate with the mobility communication module through the communicator to obtain information on how much the battery of the mobility is charged. If the charging amount of the battery is less than the first reference, the controller 300 may control the transmission module 130 to charge in the constant current mode, and if the charging amount of the battery is greater than the second reference, the controller 300 may control the transmission module 130 to charge in the constant voltage mode.

In the drawings according to the present embodiment, the first reference and the second reference are shown to be the same, but the spirit of the present disclosure is not limited thereto, and thus the second reference may be larger than the first reference. When the second reference is greater than the first reference, if the charging amount of the battery is between the first reference and the second reference, it may be controlled so that the current decreases in proportion to the current in the constant current mode as the charging amount is greater than that of the first reference, and the voltage increases in proportion to the voltage in the first reference. The current at which the charging amount increases proportionally between the first reference and the second reference may gradually decrease to the current at the second reference, and the voltage at which the charging amount increases proportionally between the first reference and the second reference may gradually increase up to the voltage at the second reference (the voltage in the constant voltage mode).

In addition, when the charging amount of the battery is less than or equal to the first reference and the temperature of the power transmitter 100 is equal to or greater than the preset reference temperature, the controller 300 may control the power transmission of the power transmitter 100 based on the second constant voltage profile PVC2 of the second voltage profile PV2 having a lower voltage than the first constant voltage profile PVC1 of the first voltage profile PV1.

When the temperature of the power transmitter 100 is less than the preset reference temperature, the controller 300 may control the power transmission of the power transmitter 100 to charge the battery based on the first current profile PI1 and the first voltage profile PV1. When the temperature is higher than the reference temperature, the controller 300 may control the power transmission of the power transmitter 100 to charge the battery based on the second current profile PI2 through which a current lower than the current profile PI1 flows, and the second voltage profile PV2 through which a voltage lower than the first voltage profile PV1 is applied.

The controller 300 may be implemented by an computing device including a microprocessor, and since the implementation method is obvious to those skilled in the art, further detailed description will be omitted. Further, the controller 300 may be provided inside the wireless charging station, but the spirit of the present disclosure is not necessarily limited thereto, and the controller 300 may be disposed separately from the wireless charging station to remotely control the charging station from the outside.

Meanwhile, in this embodiment, it has been described that the preset reference temperature is 70°C, but this reference temperature is only an example for helping understanding of the present disclosure, and the reference temperature maybe changed in consideration of various possible environments (temperature, humidity, pressure, etc.) that may affect the heat generation of the battery and the power transmitter.

Hereinafter, a method for controlling a wireless charging apparatus according to an embodiment of the present disclosure will be described.

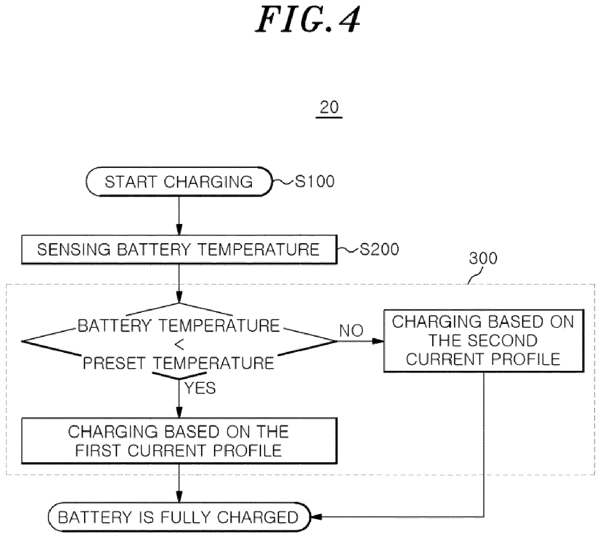

Referring to Fig. 4, the control method 20 of the wireless charging apparatus according to the embodiment of the present disclosure may include wirelessly transmitting power to the battery (S100), detecting the temperature of the power transmitting unit 100 (S200), and changing the current profile based on the measured temperature (S300).

In the step of wirelessly transmitting power to the battery (S100), in a state that the power transmitter of the wireless charging apparatus and the power receiver of the electronic device are disposed to face each other, the power of the wireless charging apparatus may be wirelessly transmitted to the battery of the electronic device.

In the step of detecting the temperature (S200), one or more of the temperature of the power transmitter, the temperature of the battery and the temperature of the power receiver may be sensed by the temperature sensor. In addition, the temperature sensor may be disposed at one or more of the power transmitter, the battery and the power receiver, and the temperature sensor may be disposed at a point where heat is expected to be generated the most, thereby detecting the highest heat generation.

In the step of changing the current profile based on the temperature (S300), the current profile of the power transmitter may be changed based on the temperature. For example, when the temperature is less than the preset reference temperature, since the power transmission of the power transmitter is controlled based on the preset first current profile PI1, through the charging current corresponding to the first current profile PI1, the battery of charge can be continuously maintained.

However, when the temperature is equal to or greater than the preset reference temperature, as the power transmission of the power transmitter is controlled based on the second current profile PI2 having a current lower than the first current profile PI1, it may be changed to a charging current corresponding to the second current profile PI2.

When the power transmission is controlled to change from the first current profile PI1 to the second current profile PI2, since the current flowing through the power transmitter 100 in the second predetermined profile is lower than the current flowing through the power transmitter 100 in the first predetermined profile, the charging efficiency of the battery in the second current profile PI2 may be lower than the charging efficiency of the battery in the first current profile PI1.

According to the above-described embodiment, when the reference temperature is higher than the reference temperature, since the battery is charged based on the second current profile PI2 and the second voltage profile PV2 to which the current and the voltage lower than the first current profile PI1 and the first voltage profile PV1 are applied, the temperature may not increase excessively.

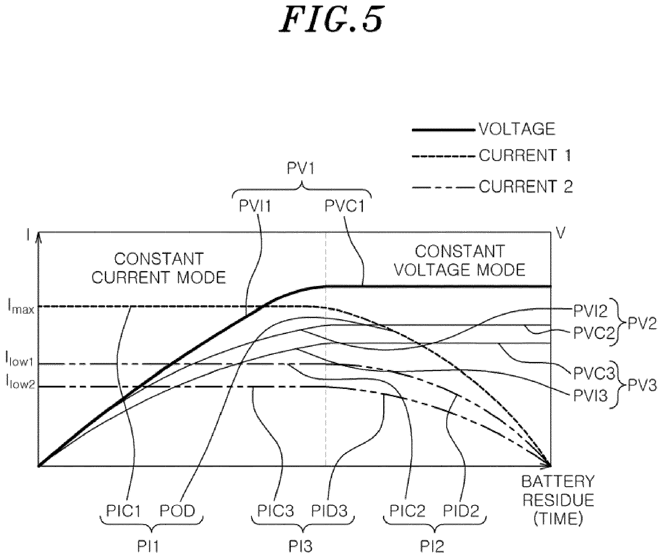

Meanwhile, referring to Fig. 5, according to another embodiment of the present disclosure, when the battery is charged based on the second current profile PI2 and the second voltage profile PV2, if it is sensed that a preliminary threshold temperature which is a temperature higher than the reference temperature is reached in the temperature sensor, the controller 300 may determine whether to continue or stop charging.

The controller 300 recognizes the time when the reference temperature is reached and the time when the preliminary threshold temperature is reached, and if the time to reach the preliminary threshold temperature after reaching the reference temperature is less than or equal to the reference time, the controller 300 may control the power transmission of the power transmitter 100 so that the battery is charged based on the third voltage profile.

In the third current profile PI3, the power transmission of the power transmitter 100 is controlled based on a current lower than the current of the second current profile PI2. The third current profile PI3 may include a third constant current profile PIC3 and a third current reduction profile PID3.

The third constant current profile PIC3 may be a profile of a section in which a current lower than the current of the second constant current profile PIC2 constantly flows as the charging time increases. The third current reduction profile PID3 may be a profile in a section in which the current gradually decreases from the third constant current profile PIC3 as the charging time (charging amount) increases. Under the condition that the charging amount of the battery is the same, the current flowing through the power transmitter 100 in the third current reduction profile PID3 may be lower than the current flowing through the power transmitter 100 in the second current reduction profile PID2.

In the third voltage profile PV3, the power transmission of the power transmitter 100 is controlled based on a voltage lower than the voltage of the second voltage profile PV2. The third voltage profile PV3 may include a third voltage increase profile PVI3 and a third constant voltage profile PVC3.

The third constant voltage profile PVC3 may be a profile of a section in which a voltage lower than that of the second constant voltage profile PVC2 is constantly applied even when the charging time (charging amount) is increased. In other words, under the condition that the charging amount of the battery is the same, the voltage applied to the power transmitter 100 in the third voltage increase profile PVI3 may be lower than the voltage applied to the power transmitter 100 in the second voltage increase profile PVI2. Therefore, when the temperature of the power transmitter 100 is equal to or greater than the preset reference temperature, the electric energy applied to the battery B may be reduced by the third voltage profile PV3, so that the heat of the battery B and the power transmitter may be reduced. As the charging time (charging amount) increases, the third voltage increase profile PVI3 may be a profile in which a voltage gradually increases from the initial state (e.g., when the charging time (charging amount) is 0) to the voltage of the third constant current profile PIC3.

On the other hand, the controller 300 recognizes the time when the reference temperature is reached and the time when the preliminary threshold temperature is reached, and if the time to reach the preliminary threshold temperature after reaching the reference temperature exceeds the reference time, since there is a risk that the battery is damaged or exploded, the electric energy to the power transmitter 100 is cut off to stop charging the battery B.

It is advantageous for charging the battery not to reach the preliminary threshold temperature when the temperature is higher than the reference temperature, but after reaching the reference temperature, it is possible to prevent damage or explosion of the battery by determining whether to continue charging the battery even if the preliminary threshold temperature is reached. When the time to reach the preliminary threshold temperature after reaching the reference temperature is less than the reference time, since it is determined that there is no excessive temperature increase because the rate of temperature increase is gentle, it is possible to continue charging with a lower voltage and a lower current. If the time to reach the preliminary critical temperature after reaching the reference temperature exceeds the reference time, charging may be stopped since an excessive temperature increase is expected because the rate of temperature increase is steep.

Combinations of steps in each flowchart attached to the present disclosure may be executed by computer program instructions. Since the computer program instructions can be mounted on a processor of a general-purpose computer, a special purpose computer, or other programmable data processing equipment, the instructions executed by the processor of the computer or other programmable data processing equipment create a means for performing the functions described in each step of the flowchart. The computer program instructions can also be stored on a computer-usable or computer-readable storage medium which can be directed to a computer or other programmable data processing equipment to implement a function in a specific manner. Accordingly, the instructions stored on the computer-usable or computer-readable recording medium can also produce an article of manufacture containing an instruction means which performs the functions described in each step of the flowchart. The computer program instructions can also be mounted on a computer or other programmable data processing equipment. Accordingly, a series of operational steps are performed on a computer or other programmable data processing equipment to create a computer-executable process, and it is also possible for instructions to perform a computer or other programmable data processing equipment to provide steps for performing the functions described in each step of the flowchart.

In addition, each step may represent a module, a segment, or a portion of codes which contains one or more executable instructions for executing the specified logical function(s). It should also be noted that in some alternative embodiments, the functions mentioned in the steps may occur out of order. For example, two steps illustrated in succession may in fact be performed substantially simultaneously, or the steps may sometimes be performed in a reverse order depending on the corresponding function.

The above description is merely exemplary description of the technical scope of the present disclosure, and it will be understood by those skilled in the art that various changes and modifications can be made without departing from original characteristics of the present disclosure. Therefore, the embodiments disclosed in the present disclosure are intended to explain, not to limit, the technical scope of the present disclosure, and the technical scope of the present disclosure is not limited by the embodiments. The protection scope of the present disclosure should be interpreted based on the following claims and it should be appreciated that all technical scopes included within a range equivalent thereto are included in the protection scope of the present disclosure.

## Claims

1. A wireless charging apparatus comprising:
a power transmitter configured to wirelessly transmit power to a battery;
a temperature sensor configured to detect at least one of a temperature of the power transmitter, a temperature of the battery, and a temperature of a power receiver; and
a controller configured to change a current profile of the power transmitter based on the temperature,
wherein when the temperature is less than a preset reference temperature, the controller controls power transmission of the power transmitter based on a preset first current profile, and
when the temperature is equal to or greater than the preset reference temperature, the controller controls power transmission of the power transmitter based on a second current profile in which a lower current flows than that in the first current profile.

2. The apparatus of claim 1, wherein the first current profile comprises a first constant profile in which a current constantly flows even if the charging time of the battery passes, and a first reduction profile in which the current is gradually lowered from the first constant profile according to the charging time.

3. The apparatus of claim 2, wherein the second current profile comprises a second constant profile that constantly flows with the current lower than the first constant profile as the charging time passes, and a second reduction profile in which the current is gradually lowered from the second constant profile according to the charging time.

4. The apparatus of claim 3, wherein a current flowing in the power transmitter in the second constant profile is lower than a current flowing in the power transmitter in the first constant profile.

5. The apparatus of any one of claims 1 to 4, wherein the power transmitter provides a constant current mode for flowing a current at a constant speed to a closed circuit regardless of time or a constant voltage mode for applying a constant voltage to the closed circuit regardless of time.

6. The apparatus of claim 5, wherein the controller controls the power transmission of the power transmitter based on the second current profile having the current lower than the first current profile when the temperature is greater than or equal to the preset reference temperature in the constant current constant mode, and
when changing from the constant current mode to the constant voltage mode, the controller controls the power transmission of the power transmitter so that the second current profile is changed to an original profile of the first current profile.

7. A control method of a wireless charging apparatus, comprising:
transmitting power wirelessly to the battery;
sensing a temperature; and
changing a current profile of a power transmitter for transmitting the power based on the temperature,
wherein the changing of the current profile based on the temperature comprises controlling power transmission of the power transmitter based on a preset first current profile when the temperature is less than a preset reference temperature, and controlling the power transmission of the power transmitter based on a second current profile in which a lower current flows than that in the first current profile when the temperature is equal to or greater than the preset reference temperature.

8. The method of claim 7, wherein the transmitting of the power wirelessly to the battery comprises providing a constant current mode that allows a current having a constant speed to flow in a closed circuit regardless of time or a constant voltage mode that applies a constant voltage to the closed circuit regardless of time.

9. The method of claim 8, wherein the changing of the current profile based on the temperature comprises:
in the constant current mode, when the temperature is equal to or greater than the preset reference temperature, controlling the power transmission of the power transmitter based on the second current profile having the current lower than the first current profile; and
when changing from the constant current mode to the constant voltage mode, controlling the power transmission of the power transmitter so that the second current profile is changed to an original profile of the first current profile.

10. The method of any one of claims 7 to 9, wherein the first current profile comprises a first constant profile in which a current constantly flows even if the charging time of the battery passes, and a first reduction profile in which the current is gradually lowered from the first constant profile according to the charging time.

11. The method of claim 10, wherein the second current profile comprises a second constant profile that constantly flows with a current lower than the first constant profile as the charging time passes, and a second reduction profile in which the current is gradually lowered from the second constant profile according to the charging time.

12. The method of claim 11, wherein a current flowing in the power transmitter in the second constant profile is lower than a current flowing in the power transmitter in the first constant profile.

13. A non-transitory computer-readable recording medium storing a computer program, comprising commands for a processor to perform a method, the method comprising:
transmitting power wirelessly to the battery;
sensing a temperature; and
changing a current profile of a power transmitter for transmitting the power based on the temperature,
wherein the changing of the current profile based on the temperature comprises controlling power transmission of the power transmitter based on a preset first current profile when the temperature is less than a preset reference temperature, and controlling the power transmission of the power transmitter based on a second current profile in which a lower current flows than that in the first current profile when the temperature is equal to or greater than the preset reference temperature.

14. The non-transitory computer-readable recording medium of claim 13, wherein the transmitting of the power wirelessly to the battery comprises providing a constant current mode that allows a current having a constant speed to flow in a closed circuit regardless of time or a constant voltage mode that applies a constant voltage to the closed circuit regardless of time.

15. The non-transitory computer-readable recording medium of claim 14, wherein the changing of the current profile based on the temperature comprises:
in the constant current mode, when the temperature is equal to or greater than the preset reference temperature, controlling the power transmission of the power transmitter based on the second current profile having the current lower than the first current profile; and
when changing from the constant current mode to the constant voltage mode, controlling the power transmission of the power transmitter so that the second current profile is changed to an original profile of the first current profile.
